(19) Europäisches Patentamt
European Patent Office
Office européen des brevets

(11) EP 0 627 960 B1

(12) **FASCICULE DE BREVET EUROPEEN**

(45) Date de publication et mention de la délivrance du brevet:
**27.11.1996 Bulletin 1996/48**

(21) Numéro de dépôt: **92920931.0**

(22) Date de dépôt: **18.09.1992**

(51) Int. Cl.$^6$: **B01J 13/00**

(86) Numéro de dépôt international:
**PCT/FR92/00876**

(87) Numéro de publication internationale:
**WO 93/05875 (01.04.1993 Gazette 1993/09)**

# (54) SOLUTIONS COLLOIDALES CONCENTREES DE PARTICULES MONOCRISTALINES NON AGREGEES D'OXYDES DE METAUX, LEUR PROCEDE DE PREPARATION ET LEUR APPLICATION A L'OBTENTION DE FILMS

KONZENTRIERTE KOLLOIDALE LÖSUNGEN VON MONOKRISTALLIERTEN, NICHTAGGREGIERTEN TEILCHEN VON METALLOXYDEN, METHODE ZU DEREN HERSTELLUNG UND ANWENDUNG ZUR HERSTELLUNG VON FILMEN

COLLOIDAL AND CONCENTRATED SOLUTION OF MONOCRYSTAL-PARTICLES FROM METALLIC OXIDES, PROCESSES FOR THEIR PREPARATION AND THEIR APPLICATIONS

(84) Etats contractants désignés:
**AT BE CH DE DK ES FR GB GR IE IT LI LU MC NL SE**

(30) Priorité: **20.09.1991 FR 9111633**

(43) Date de publication de la demande:
**14.12.1994 Bulletin 1994/50**

(73) Titulaire: **RHONE-POULENC CHIMIE**
**92408 Courbevoie Cédex (FR)**

(72) Inventeurs:
- **CHATRY, Murielle**
  **F-75011 Paris (FR)**
- **HENRY, Marc**
  **F-91650 Breuillet (FR)**
- **In, Martin**
  **F-92120 Montrouge (FR)**
- **SANCHEZ, Clément**
  **F-91190 Gif-sur-Yvette (FR)**

(74) Mandataire: **Seugnet, Jean Louis et al**
**RHONE-POULENC CHIMIE,**
**Direction de la Propriété Industrielle,**
**25, Quai Paul Doumer**
**92408 Courbevoie Cédex (FR)**

(56) Documents cités:
**EP-A- 0 348 288**
**US-A- 3 758 670**
**US-A- 4 060 511**

- **Database WPIL, accession no. 88-343169 (48), Derwent Publications Ltd, Londres, GB, & JP,A,63257132 (FURUKAWA ELECTRIC CO.) 25 October 1988, voir résumé**
- **Database WPIL, accession no. 91-270203 (37), Derwent Publications Ltd, Londres, GB, & JP,A,03177304 (TOSHIBA K.K.) 1 August 1991, voir résumé**
- **Database WPIL, accession no. 87-352126 (50), Derwent Publications Ltd, Londres, GB, & JP,A,62255438 (FUJI KAGAKU KOGYO) 7 November 1987, voir résumé**
- **Database WPIL, accession no. 88-358439 (50), Derwent Publications Ltd, Londres, GB, & JP,A,63270472 (IDEMITSU KOSAN) 8 November 1988, voir résumé**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 627 960 B1

## Description

La présente invention a pour objet des solutions colloïdales concentrées de particules monocristallines non agrégées d'oxydes de métaux de préférence tétravalents, leur procédé de préparation à partir notamment d'alcoxydes desdits métaux et leur application à l'obtention de films pour la protection de surfaces ou l'élaboration de couches optiques.

La demande de brevet EP 348 288 décrit la formation de film de dioxyde de zirconium par application sur un support, d'un sol obtenu par hydrolyse d'acétylacétonate de zirconium, suivie du séchage de l'ensemble à une température supérieure à 200°C. Ce document ne décrit en aucun cas l'obtention de solutions colloïdales concentrées de particules monocristallines non agrégées de métaux selon l'invention.

La présente invention a donc pour objet des solutions colloïdales concentrées de particules monocristallines non agrégées de métaux de préférence tétravalents, solutions caractérisées en ce qu'elles sont constituées de 1 à 30 %, de préférence de 10 à 20 % de leur poids de particules monocristallines non agrégées de diamètre hydrodynamique de l'ordre de 2 à 10 nm, de préférence de l'ordre de 2 à 4 nm, d'oxydes de métaux M des groupes 1 b à 7 b, 8 et lanthanides de la classification périodique, à l'état complexé, dans un solvant non aqueux, par un ligand susceptible de complexer lesdits metaux M sous forme de leurs dérivés de formule (I) hydrolysables et polycondensables

$$M(Y)n \qquad (I)$$

formule où M a la définition ci-dessus, n représente la valence dudit métal M et où les radicaux Y sont semblables ou différents et représentent les groupes :

- -OR où R est un radical alkyle linéaire ou ramifié en C1-C18, de préférence en C1-C4, ou phényle
- -X où X est un halogène, du chlore de préférence
- 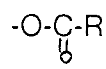

  où R est un radical alkyle linéaire ou ramifié en C1-C18, de préférence en C1-C4, ou phenyle
- =O

le nombre de radicaux

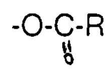

ou =O étant toujours inférieur à la valence du métal M ; il est de préférence de 1 ou 2 suivant la nature du métal.

Parmi les métaux M on peut citer notamment les métaux tétravalents tels que Zr, T, Hf, Ta, Ce IV..., y compris leurs mélanges compatibles.

Ceux-ci sont présents dans les composés de formule (I) notamment sous la forme d'alcoxydes tels qu'éthoxydes, propoxydes...

Parmis les ligands on peut citer les dérivés présentant au moins un groupement fonctionnel du type radical carboxyle, β dicarboxyle, α ou β hydroxycarboxyle, structure cetoester, cetomine, diol...

On peut mentionner à titre d'exemple l'acetylacetone, l'acide mandélique, l'acide salicylique...

Des types particuliers de ligand peuvent être constitués par des ligands "monomères" présentant au moins un groupement fonctionne ethyléniquement insaturé susceptible de polymériser par voie radicalaire.

A titre d'exemples de ligands "monomères" on peut citer l'acétoxyethylméthacrylate, l' α hydroxyméthacrylate de méthyle, l'acide methacrylamino -4 ou -5 salicylique, l'acide acrylique, l'acide méthacrylique, l'allylacetylacetone, l'acétoacétate d'allyle...

Ledit solvant non aqueux est par exemple un alcool aliphatique en C1-C5 (éthanol, propanol, butanol...), un solvant polaire tétrahydrofuranne, dimethylformamide, carbonate de propylène...) un solvant aromatique (toluène, benzène...), aliphatique (cyclohexane...).

Lesdites solutions colloïdales faisant l'objet de l'invention peuvent être préparées selon un procédé caractérisé en ce que :

1) on réalise la complexation en milieu solvant non-aqueux dudit composé de formule (I) par un ligand dudit composé de formule (I), le rapport molaire ligand/M étant de l'ordre de 0,4 à 1,5, de préférence de l'ordre de 0,8 à 1,2.

2) on réalise l'hydrolyse et la polycondensation du complexe formé à l'aide d'une solution aqueuse d'un acide fort se dissociant complètement dans l'eau, soluble dans le milieu et non complexant du composé de formule (I). Ledit acide fort est avantageusement soluble dans les alcools légers C1 à C4) et présentant telle que son pKa soit inférieur à ou égal à 1, de préférence à 0.

- le rapport molaire eau/M étant de l'ordre de 5 à 200, de préférence de l'ordre de 10 à 15.
- le rapport molaire acide/M étant de l'ordre de 0,2 à1, de préférence de l'ordre de 0,7 à 1.

3) on chauffe le polycondensat obtenu à une température de l'ordre de 20 à 80°C, de préférence de l'ordre de 60 à 80°C, jusqu'à cristallisation des particules de polycondensat.

L'opération de complexation est favorablement réalisée à température ambiante avec une concentration de composé de formule I dans le solvant de l'ordre de 0,1 à 2 moles de métal / litre, de préférence de l'ordre de 1 mole de métal / litre.

Des exemples de composé de formule I, de ligand et de solvant non-aqueux ont déjà été mentionnés ci-dessus.

L'opération d'hydrolyse-polycondensation est favorablement réalisée à une température de l'ordre de 20°C ; elle dure généralement de l'ordre d'une heure ; on obtient un sol de particules amorphes d'oxydes métalliques dont la surface est protégée par les complexants.

Comme exemple d'acide on peut citer les acides sulfoniques, l'acide trifluoroacétique, l'acide triflique...

La présence d'un acide fort se dissociant complètement dans l'eau et dont l'anion n'est pas complexant du dérivé de formule (I) est indispensable ; il a été en effet constaté qu'en l'absence d'un tel acide, la solution colloïdale obtenue après chauffage est constituée de particules d'oxydes amorphes et non de particules d'oxydes cristallines.

Le sol transparent obtenu après hydrolyse-polycondensation en milieu acide fort est ensuite chauffé jusqu'à formation de monocristaux non agrégés, présentant un diamètre hydrodynamique de l'ordre de 2 à 10 nm, de préférence de l'ordre de 2 à 4 nm.

L'opération de chauffage dure généralement de l'ordre de 1 heure à 24 heures.

Une variante particulièrement intéressante du procédé consiste à réaliser les étapes d'hydolyse-polycondensation et de chauffage simultanément ou quasisimultanément.

Les solutions colloïdales concentrées de particules cristallines non-agrégées d'oxydes de métaux faisant l'objet de l'invention peuvent être utilisées pour l'obtention de films d'oxydes pour :

- la protection de surface par revêtements (protection réfractaire ou hydrophobe, passivation des aciers...).
- l'élaboration de couches optiques anti-reflets.
- l'élaboration de couches de porosité controlée pour l'élaboration de films à variation ou gradient d'indice de réfraction.

La présente invention a également pour objet les sols ou gels de polymères mixtes organiques-inorganiques obtenus par polymération organique à une température de l'ordre de 20 à 100°C en présence d'un amorceur susceptible de se dissocier par voie thermique ou photochimique en radicaux libres, des solutions colloïdales concentrées de particules monocristallines non agrégées ci-dessus décrites obtenues en mettant en oeuvre comme ligand, un ligand "monomère".

Le milieu de polymérisation organique peut en outre renfermer de 0 à 99,5 %, de préférence de 0 à 75 % d'au moins un comonomère copolymérisable, exprimé par rappot au poids total de monomères (ligand monomère + comonomère).

La température de polymérisation organique est choisie en fonction du type amorceur et de la température de ce dernier.

La quantité d'amorceur mise en oeuvre peut être de l'ordre de 0,1 à 5 % en poids par rapport aux monomères (ligand monomère + comonomère), de préférence de l'ordre de 1 à 2 %.

Parmi les amorceurs pouvant être mis en oeuvre on peut citer :

- les azonitriles, comme le 2,2' - azobis (isobutyronitrile), le 1,1' - azobis (cyclohexane-1-carbonitrile)...
- les péroxydes organiques tels que le péroxyde d'acetylcyclohexane sulfonyle, le péroxydicarbonate de bis (2 - éthylhexyle), le péroxydicarbonate de diisopropyle, le péroxyde de bis (2,4 - dichlorobenzole), le perpivalate de t-butyle, le péroxyde de benzoyle, le péroxyde de lauryole, le péroxyde d'octanoyle, le 1,1 dit-butyl péroxy 3,5,5 trimethylcyclohexane, le péroxyde de dicumyle, le péroxydicarbonate d'isopropyle...
- les photoamorceurs de polymérisation radicalaire, tels que les alcoxyacetophenones, les haloacetophenones, les $\alpha$ - hydroxy acétophenones, les ethers de benzoïne, les oximes de benzoyle, les oxydes d'acylphosphines, les composés azoïques du type de ceux mentionnés ci-dessus...

Si désiré, l'opération de polymérisation organique peut être réalisée en présence de 0 à 5 % en poids par rapport au(x) monomère(s) d'un agent limiteur de chaîne tels que les alkylmercaptans, les hydrocarbures halogénés...

Parmi les comonomères susceptibles de copolymériser avec ledit ligand monomère, on peut citer :

- les monomères vinylaromatiques (styrène, vinyltoluène...)
- les hydroxyalkylesters d'acides $\alpha$ - $\beta$ insaturés (acrylates ou méthacrylates d'hydroxyalkyle...)
- les acides carboxyliques $\alpha$ - $\beta$ insaturés (acide acrylique, méthacrylique...)
- les esters insaturés d'acides carboxyliques (acétate de vinyle, propionate de vinyle, versatate de vinyle...)
- le chlorure de vinyle ou de vinylidène
- ceux présentant des fonctions nitriles (acrylonitrile...), amides (acrylamide, méthacrylamide...)
- les monomères di ou polyfonctionnels tels que les diènes conjugués (butadiène...), le divinylbenzène et ses dérivés...

Lesdits sols ou gels de polymères mixtes organiques-inorganiques peuvent avantageusement être utilisés comme matériaux d'interface ou d'adhésion entre un matériau céramique et un matériau polymère organique.

Les exemples suivants sont donnés à titre indicatif et ne peuvent être considérés comme une limite de l'esprit de l'invention.

EXEMPLE 1 :

On prépare un complexe de n-propoxyde de zirconium en mettant en présence :

- 2,65 ml d'acétylacétone (acac),
- 11 ml de propanol,
- 10 ml d'une solution à 70 % en poids de tétra n-propoxyde de zirconium dans le n-propanol,

ce qui correspond :

* aux concentrations molaires [Zr] = 1,05 M
  [acac] = 1,08 M
* à un rapport molaire acac / Zr = 1,032

La solution obtenue est hydrolysée et polycondensée à l'aide d'une solution d'acide paratoluenesulfonique (APTS) en concentration variable ; la quantité d'eau présente correspond à un rapport molaire $H_2O$ / Zr de 10.

Le sol obtenu est chauffé à différentes températures pendant une heure.

On obtient un sol contenant 11 % de son poids de particules cristallisées non-agrégées dont le diamètre hydrodynamique déterminé par diffusion quasi-élastique de la lumière figure au tableau 1.

TABLEAU I

| $H^+$ / Zr | Diamètre hydrodynamique (nm) des particules après chauffage à : | | | |
|---|---|---|---|---|
| | 22°C | 43°C | 60°C | 80°C |
| 0,18 | 5 | 3 | 3 | 5 |
| 0,54 | 3 | 3 | 4 | 3 |
| 0,72 | 3 | 3 | 4 | 3 |
| 0,82 | 3 | 3 | 4 | 4 |
| 1,09 | 3 | 3 | 4 | 4 |

L'état cristallin du produit est confirmé par diagramme de Debye-Scherrer et par la présence de plan réticulaires visibles par études en M.E.T. (Microscopie Electronique à Transmission).

La non agrégation des particules est confirmée par l'étude comparée des tailles mesurées par diffusion quasi-élastique de la lumière et celles mesurées par M.E.T.

EXEMPLE 2 :

On répète l'opération décrite à l'exemple 1 en mettant en oeuvre les différents réactifs selon les conditions suivantes :

| | | |
|---|---|---|
| [n-propoxyde de Zr] | = 1,97 M | acac / Zr = 0,37 |
| [acac] | = 0,70 M | |
| [propanol] | = 5,02 M | propanol / Zr = 2,1 |
| [eau] | = 20 M | |
| $H^+$ / Zr | = 0,7 | |

On obtient après 1 heure de chauffage à 60°C, un sol de particules mono cristallines non-abrégées présentant un diamètre hydrodynamique de 6 nm ; sa concentration en poids de particules monocristallines est de 20 %.

EXEMPLE 3:

On répète l'opération décrite à l'exemple 1 en mettant en oeuvre du n-propoxyde de Zr pur (au lieu d'une solution dans le propanol), selon les conditions suivantes :

| | |
|---|---|
| [n-propoxyde de Zr] = 2,48 M | acac/Zr = 0,43 |
| [acac] = 1,07 M | |
| [propanol] = 1,45 M | propanol/Zr = 0,58 |
| [eau] = 25 M | |
| $H^+$/Zr = 0,7 | |

On obtient après 1 heure de chauffage à 60°C, un sol de particules monocristallines non agrégées.

EXEMPLES COMPARATIFS :

On répète l'opération décrite à l'exemple 1, en réalisant l'hydrolyse et la polycondensation en l'absence d'APTS.

On constate qu'après chauffage, le sol obtenu est constitué de particules amorphes.

Mode opératoire pour la préparation de suspensions colloïdales de tailles ajustables par hydrolyse-condensation d'alcoxydes de titane (IV) ou de cérium (IV) modifiés par l'acétylacétone.

EXEMPLE COMPARATIF 4 : TITANE

Des solutions 1 molaire en butoxyde de titane (IV) modifié par de l'acétyl acétone, dans des rapports r (r=acac/M) variant de 0,3 à 1, sont hydrolysées par un mélange eau-butanol (1-9 en poids). Pour un taux d'hydrolyse de 4 ($h=H_2O/M$) la taille des espèces polymériques, mesurée en suspension par diffusion quasi-élastique de la lumière, montre les variations suivantes de diamètre hydrodynamique équivalent (Φ) :

r=1-->Φ=3nm ; r=0,7-->Φ=3nm ;r=0,5-->Φ=5nm ;r=0,3-->Φ=40nm

Pour un taux d'hydrolyse de 10, la taille, mesurée dans les mêmes conditions augmente :

r=1-->Φ=5nm ; r=0,7-->Φ=6nm ;r=0,5-->Φ=15nm ;r=0,3-->gélification.

EXEMPLE COMPARATIF 5 : CERIUM

Des solutions 0,05 molaire en isopropoxyde de cerium (IV) modifié par de l'acétylacétone, dans des rapports r variant de 0,15 à 1, sont hydrolysées par un mélange eau-isopropanol (1-9 en poids). Pour un taux d'hydrolyse de 4 (h=$H_2O$/M) la taille des espèces polymériques, mesurée en suspension par diffusion quasi-élastique de la lumière, montre les variations suivantes de diamètre hydrodynamique équivalent (F) :

r=1-->Φ=2nm ; r=0,5-->Φ=7nm ;r=0,25-->Φ=25nm ;r=0,15-->Φ=50nm

## Revendications

1. Solutions colloïdales concentrées de particules monocristallines non agrégées de métaux, solutions caractérisées en ce qu'elles sont constituées de 1 à 30 % de leur poids de particules monocristallines non agrégées de diamètre hydrodynamique de l'ordre de 2 à 10 nm, d'oxydes de métaux M des groupes 1b à 7b, 8 et lanthanides de la classification périodique, à l'état complexé, dans un solvant non aqueux, par un ligand susceptible de complexer lesdits métaux M sous forme de leurs dérivés de formule (I) hydrolysables et polycondensables :

M(Y)n (I)

formule où M a la définition ci-dessus, n représente la valence dudit métal M et où les radicaux y sont semblables ou différents et représentent les groupes :

- OR où R est un radical alkyle linéaire ou ramifié en C1-C18 ou phényle,
- X où X est un halogène,

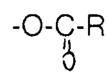

où R est un radical alkyle linéaire ou ramifié en C1-C18 ou phényle,
= O
le nombre de radicaux

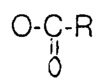

ou = O étant toujours inférieur à la valence du métal M.

2. Solutions colloïdales selon la revendication 1 caractérisées en ce que le dérivé de formule I est un éthoxyde ou propoxyde de Zr, Ti, Hf, Ta, CeIV.

3. Solutions colloïdales selon la revendication 1 ou 2 caractérisées en ce que ledit ligand présente au moins un radical carboxyle, b dicarbonyle, a ou b hydroxycarbonyle, ou une structure cetoester, cetoamine, ou diol.

4. Solutions colloïdales selon l'une quelconque des revendications précédentes caractérisées en ce que ledit ligand est l'acétylacétone, l'acide mandélique, l'acide salicylique.

5. Solutions colloïdales selon la revendication 3 caractérisées en ce que ledit ligand "monomère" présentant au moins un groupement fonctionnel éthyléniquement insaturé susceptible de polymériser par voie radicalaire.

6. Solutions colloïdales selon la revendication 5 caractérisées en ce que le ligand "monomère" est l'acétoacétoxyéthylméthacrylate, l'α-hydroxyméthacrylate de méthyle, l'acide méthacrylamino-4 ou -5 salicylique, l'acide acrylique, l'acide méthacrylique, l'allylacétylacétone, l'acétoacétate d'allyle.

7. Solutions colloïdales selon l'une quelconque des revendications précédentes caractérisées en ce que le solvant non aqueux est un alcool aliphatique en C1-C5, un solvant polaire, un solvant aromatique ou aliphatique.

8. Procédé de préparation de solutions colloïdales faisant l'objet de la revendication 1, caractérisé en ce que :

1. on réalise la complexation en milieu solvant non aqueux dudit dérivé de formule (I) par un ligand dudit dérivé de formule (I), le rapport molaire ligand/M étant compris entre 0,4 à 1,5.

2. on réalise l'hydrolyse et la polycondensation du complexe formé à l'aide d'une solution aqueuse d'un acide fort se dissociant complètement dans l'eau, soluble dans le milieu et non complexant du composé de formule (I).

- le rapport molaire eau/M étant de l'ordre de 5 à 200.
- le rapport molaire acide/M étant de l'ordre de 0,2 à 1.

3. on chauffe le polycondensat obtenu à une température de l'ordre de 20 à 80°C jusqu'à cristallisation des particules de polycondensat.

**9.** Procédé selon la revendication 8 caractérisé en ce que le dérivé de formule (I) est un éthoxyde ou propoxyde de Zr, Ti, Hf, Ta, CeIV.

**10.** Procédé selon la revendication 8 ou 9 caractérisé en ce que ledit ligand présente au moins un radical carboxyle, β-dicarbonyle, α ou β-hydroxycarboyle, ou une structure cetoester, cetoamine, ou diol.

**11.** Procédé selon l'une quelconque des revendications 8 à 10 caractérisé en ce que ledit ligand est l'acétylacétone, l'acide mandélique, l'acide salicylique.

**12.** Procédé selon la revendication 10 caractérisé en ce que ledit ligand "monomère" présentant au moins un groupement fonctionnel éthyléniquement insaturé susceptible de polymériser par voie radicalaire.

**13.** Procédé selon la revendication 12 caractérisé en ce que ledit ligand "monomère" est l'acétoacétoxyéthylméthacrylate, l'α-hydroxyméthacrylate de méthyle, l'acide methacrylamino -4 ou -5 salicylique, l'acide acrylique, l'acide méthacrylique, l'allylacetylacetone, l'acetoacétate d'allyle...

**14.** Procédé selon l'une des revendications 8 à 13 caractérisé en ce que le solvant non aqueux est un alcool aliphatique en C1-C5, un solvant polaire, un solvant aromatique ou aliphatique.

**15.** Procédé selon l'une quelconque des revendications 8 à 14 caractérisé en ce que l'opération de complexation est réalisée à température ambiante avec une concentration de dérivé de formule (I) dans le solvant de l'ordre de 0,1 à 2 moles de métal/litre.

**16.** Procédé selon l'une quelconque des revendications 8 à 15 caractérisé en ce que l'acide fort mis en oeuvre pour réaliser l'hydrolyse et la polycondensation est l'acide paratoluenesulfonique, l'acide trifluoroacétique, l'acide triflique.

**17.** Procédé selon l'une quelconque des revendications 8 à 16 caractérisé en ce que les étapes d'hydrolyse-polycondensation et de chauffage sont réalisées simultanément ou quasi-simultanément.

**18.** Sols ou gels de polymères mixtes organiques-inorganiques obtenus par polymérisation organique à une température de l'ordre de 20 à 100°C en présence d'un amorceur susceptible de se dissocier par voie thermique ou photochimique en radicaux libres, des solutions colloïdales concentrées de particules monocristallines non agrégées faisant l'objet de la revendication 5 ou 6, solutions colloïdales renfermant en outre de 0 à 99,5 % d'au moins un comonomère copolymérisable, exprimé par rapport au poids total de monomères.

**19.** Sols ou gels de polymères mixtes selon la revendication 18 caractérisés en ce que la quantité d'amorceur mise en oeuvre est de l'ordre de 0,1 à 5 % en poids par rapport aux monomères.

**20.** Utilisation des solutions colloïdales faisant l'objet de l'une des revendications 1 à 7 pour l'obtention des films d'oxydes.

**21.** Utilisation des sols ou gels de polymères mixtes faisant l'objet de la revendication 18 ou 19 comme matériaux d'interface ou d'adhésion entre un matériau céramique et un matériau polymère organique.

## Claims

1. Concentrated colloidal solutions of non-aggregated metal monocrystalline particles, which solutions are characterised in that they are constituted from 1 to 30% of their weight by non-aggregated monocrystalline particles with a hydrodynamic diameter in the order of 2 to 10nm, M metal oxides of groups 1b to 7b, 8 and lanthanides of the periodic classification system, in the complexed state, in a non aqueous solvent, by a ligand which is capable of complexing said M metals in the form of their hydrolysable and polycondensable formula (I) derivatives:

$$M(Y)n \qquad (I)$$

in which formula M has the above definition, n represents the valency of said M metal and the y radicals are the same or different and represent the groups:

- OR where R is a linear or branched alkyl radical with C1-C18 or phenyl,
- X where X is a halogen,

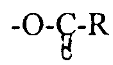

where R is a linear or branched alkyl radical with C1-C18 or phenyl,
= O
the number of

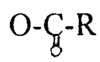

or =O radicals always being less than the valency of the M metal.

2. Colloidal solutions according to Claim 1, characterised in that the formula I derivative is an ethoxide or propoxide of Zr, Ti, Hf, Ta, CeIV.

3. Colloidal solutions according to Claim 1 or Claim 2, characterised in that said ligand has at least one carboxyl radical, b dicarbonyl, a or b hydroxycarbonyl, or a ketoester structure, ketoamine, or diol.

4. Colloidal solutions according to any one of the preceding claims, characterised in that said ligand is acetylacetone, mandelic acid, salicylic acid.

5. Colloidal solutions according to Claim 3, characterised in that said "monomer" ligand has at least one functional group unsaturated with ethylene which is capable of polymerisation in radical-like way.

6. Colloidal solutions according to Claim 5, characterised in that the "monomer" ligand is acetoacetoxyethylmethacrylate, $\alpha$ - methyl hydroxymethacrylate, 4- or 5-methacrylamino salicylic acid, acrylic acid, methacrylic acid, allylacetylacetone, allyl acetoacetate.

7. Colloidal solutions according to any one of the preceding claims, characterised in that the non-aqueous solvent is a C1-C5 aliphatic alcohol, a polar solvent, an aromatic or aliphatic solvent.

8. A process for the preparation of colloidal solutions which are the object of Claim 1, characterised in that:

   1. the complexing operation is carried out in non aqueous solvent medium of said formula (I) derivative by a ligand of said formula (I) derivative, the ligand/M molar ratio being between 0.4 and 1.5.
   2. the hydrolysis operation and polycondensation operation of the complex formed are carried out using an aqueous solution of a strong acid which becomes completely dissociated in water, and which is soluble in the medium and which is non-complexing with respect to the formula (I) compound,

   . the water/M molar ratio being in the order of 5 to 200.

. the acid/M molar ratio being in the order of 0.2 to 1.

3. the polycondensate obtained is heated to a temperature in the order of 20 to 80°C until the particles of the polycondensate crystallise.

**9.** A process according to Claim 8, characterised in that the formula (I) derivative is a Zr, Ti, Hf, Ta, CeIV ethoxide or propoxide.

**10.** A process according to Claim 8 or Claim 9, characterised in that said ligand has at least one carboxyl radical, β-dicarbonyl, α-or β-hydroxycarboyl, or a ketoester structure, ketoamine, or diol.

**11.** A process according to any one of Claims 8 to 10, characterised in that said ligand is acetylacetone, mandelic acid, salicylic acid.

**12.** A process according to Claim 10, characterised in that said "monomer" ligand has at least one functional group unsaturated with ethylene which is capable of polymerisation in radical-like way.

**13.** A process according to Claim 12, characterised in that said "monomer" ligand is acetoacetoxyethylmethacrylate, α-methyl hydroxymethacrylate, 4- or 5-methacrylamino salicylic acid, acrylic acid, methacrylic acid, allylacetylacetone, allyl acetoacetate...

**14.** A process according to one of Claims 8 to 13, characterised in that the non aqueous solvent is an aliphatic alcohol with C1-C5, a polar solvent, an aromatic or aliphatic solvent.

**15.** A process according to any one of Claims 8 to 14, characterised in that the complexing operation is carried out at ambient temperature with a concentration of formula (I) derivative in the solvent in the order of 0.1 to 2 moles of metal/litre.

**16.** A process according to any one of Claims 8 to 15, characterised in that the strong acid used to carry out the hydrolysis operation and the polycondensation operation is paratoluene sulphonic acid, trifluoroacetic acid, triflic acid.

**17.** A process according to any one of Claims 8 to 16, characterised in that the hydrolysis-polycondensation and heating steps are carried out simultaneously or quasi-simultaneously.

**18.** Sols or gels of mixed organic and inorganic polymers obtained by organic polymerisation at a temperature in the order of 20 to 100°C, in the presence of a primer capable of being dissociated by thermal methods or by photochemical methods into free radicals, concentrated colloidal solutions of non-aggregated monocrystalline particles which are the object of Claim 5 or Claim 6, colloidal solutions also containing 0 to 99.5% of at least one copolymerisable comonomer, expressed in relation to the total weight of monomers.

**19.** Sols or gels of mixed polymers according to Claim 18, characterised in that the amount of primer used is in the order of 0.1 to 5% by weight in relation to the monomers.

**20.** Use of the colloidal solutions which are the objects of one of Claims 1 to 7 to obtain oxide films.

**21.** Use of sols or gels of mixed polymers which are the objects of Claim 18 or Claim 19 as interface materials or adhesive materials between a ceramics material and an organic polymer material.

**Patentansprüche**

**1.** Konzentrierte kolloidale Lösungen von mikrokristallinen, nicht aggregierten Teilchen von Metallen, dadurch gekennzeichnet, daß sie aus 1 bis 30 % ihres Gewichtes mikrokristallinen, nicht aggregierten Teilchen von Oxiden der Metalle M der Gruppen 1b bis 7b, 8 und der Lanthanide des Periodensystems mit einem hydrodynamischen Durchmesser in der Größenordnung von 2 bis 10 nm bestehen, in einem nicht wäßrigen Lösungsmittel und im komplexen Zustand durch einen Liganden, der geeignet ist, die genannten Metalle M in Form ihrer hydrolysierbaren und polykondensierbaren Derivate der Formel (I) in einen Komplex zu überführen:

$$M(Y)_n \qquad (I)$$

worin M die oben genannte Definition besitzt, n die Wertigkeit des genannten Metalls darstellt und die Reste Y gleich oder verschieden sind und die folgenden Gruppen bedeuten:

- OR, worin R ein linearer oder verzweigter Alkylrest mit 1 bis 18 Kohlenstoffatomen oder Phenyl ist,
- X, worin X ein Halogen ist,

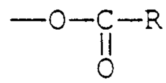

worin R ein linearer oder verzweigter Alkylrest mit 1 bis 18 Kohlenstoffatomen oder Phenyl ist,
=O
wobei die Anzahl der Reste

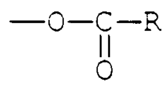

oder =O immer unter der Wertigkeit des Metalles M liegt.

**2.** Kolloidale Lösungen nach Anspruch 1, dadurch gekennzeichnet, daß das Derivat der Formel (I) ein Ethoxid oder Propoxid von Zr, Ti, Hf, Ta, Ce(IV) ist.

**3.** Kolloidale Lösungen nach Anspruch 1 oder 2, dadurch gekennzeichnet, daß der Ligand mindestens einen Rest Carboxyl, β-Dicarbonyl, α- oder β-Hydroxycarbonyl, oder eine Struktur von Ketoester, Ketoamin oder Diol aufweist.

**4.** Kolloidale Lösungen nach irgendeinem der vorstehenden Ansprüche, dadurch gekennzeichnet, daß der genannte Ligand Acetylaceton, Mandelsäure, Salicylsäure ist.

**5.** Kolloidale Lösungen nach Anspruch 3, dadurch gekennzeichnet, daß der genannte Ligand "Monomer", der mindestens eine ethylenisch ungesättigte funktionelle Gruppe aufweist, fähig ist, auf radikalischem Wege zu polymerisieren.

**6.** Kolloidale Lösungen nach Anspruch 5, dadurch gekennzeichnet, daß der Ligand "Monomer" Acetoacetoxyethylmethacrylat, α-Hydroxymethacrylat von Methyl, 4- oder 5-Methacrylaminosalicylsäure, Acrylsäure, Methacrylsäure, Allylacetylaceton, Acetoacetat von Allyl ist.

**7.** Kolloidale Lösungen nach irgendeinem der vorstehenden Ansprüche, dadurch gekennzeichnet, daß das nicht wäßrige Lösungsmittel ein aliphatischer Alkohol mit 1 bis 5 Kohlenstoffatomen, ein polares Lösungsmittel, ein aromatisches oder aliphatisches Lösungsmittel ist.

**8.** Verfahren zur Herstellung der den Gegenstand von Anspruch 1 bildenden kolloidalen Lösungen, dadurch gekennzeichnet, daß man

1. die Komplexbildung des genannten Derivates der Formel (I) durch einen Liganden des genannten Derivates der Formel (I) im Medium eines nicht wäßrigen Lösungsmittels realisiert, wobei das molare Verhältnis Ligand/M zwischen 0,4 und 1,5 liegt,
2. die Hydrolyse und die Polykondensation des gebildeten Komplexes mit Hilfe einer wäßrigen Lösung einer starken Säure, die sich vollständig in Wasser dissoziiert, in dem Medium löslich ist und mit der Verbindung der Formel (I) keinen Komplex bildet, realisiert, wobei

. das molare Verhältnis Wasser/M in der Größenordnung von 5 bis 200 und
. das molare Verhältnis Säure/M in der Größenordnung von 0,2 bis 1 liegt,

3. das erhaltene Polykondensat auf eine Temperatur in der Größenordnung von 20 °C bis 80 °C bis zur Kristallisation der Teilchen des Polykondensates erhitzt.

9. Verfahren nach Anspruch 8, dadurch gekennzeichnet daß das Derivat der Formel (I) ein Ethoxid oder Propoxid von Zr, Ti, Hf, Ta, Ce(IV) ist.

10. Verfahren nach Anspruch 8 oder 9, dadurch gekennzeichnet, daß der Ligand mindestens einen Rest Carboxyl, β-Dicarbonyl, α- oder β-Hydroxycarbonyl, oder eine Struktur von Ketoester, Ketoamin oder Diol aufweist.

11. Verfahren nach irgendeinem der Ansprüche 8 bis 10, dadurch gekennzeichnet, daß der genannte Ligand Acetylaceton, Mandelsäure, Salicylsäure ist.

12. Verfahren nach Anspruch 10, dadurch gekennzeichnet, daß der genannte Ligand "Monomer", der mindestens eine ethylenisch ungesättigte funktionelle Gruppe aufweist, fähig ist, auf radikalischem Wege zu polymerisieren.

13. Verfahren nach Anspruch 12, dadurch gekennzeichnet, daß der genannte Ligand "Monomer" Acetoacetoxyethylmethacrylat, α-Hydroxymethacrylat von Methyl, 4- oder 5-Methacrylaminosalicylsäure, Acrylsäure, Methacrylsäure, Allylacetylaceton, Acetoacetat von Allyl ist.

14. Verfahren nach einem der Ansprüche 8 bis 13, dadurch gekennzeichnet, daß das nicht wäßrige Lösungsmittel ein aliphatischer Alkohol mit 1 bis 5 Kohlenstoffatomen, ein polares Lösungsmittel, ein aromatisches oder aliphatisches Lösungsmittel ist.

15. Verfahren nach irgendeinem der Ansprüche 8 bis 14, dadurch gekennzeichnet, daß der Arbeitsgang der Komplexbildung bei Umgebungstemperatur mit einer Konzentration an dem Derivat der Formel (I) in dem Lösungsmittel in der Größenordnung von 0,1 bis 2 Mol Metall/Liter realisiert wird.

16. Verfahren nach irgendeinem der Ansprüche 8 bis 15, dadurch gekennzeichnet, daß die für die Realisierung der Hydrolyse und der Polykondensation eingesetzte starke Säure para-Toluolsulfonsäure, Trifluoressigsäure, Triflinsäure ist.

17. Verfahren nach irgendeinem der Ansprüche 8 bis 16, dadurch gekennzeichnet, daß die Stufen Hydrolyse - Polykondensation und das Erhitzen simultan oder quasi-simultan realisiert werden.

18. Sole oder Gele von gemischten organisch-anorganischen Polymeren, erhalten durch organische Polymerisation von konzentrierten kolloidalen Lösungen von mikrokristallinen, nicht aggregierten Teilchen, die den Gegenstand von Anspruch 5 oder 6 bilden, bei einer Temperatur in der Größenordnung von 20 °C bis 100 °C in Anwesenheit eines Initiators, der fähig ist, auf thermischem oder photochemischem Wege freie Radikale zu bilden, wobei die kolloidalen Lösungen außerdem 0 bis 99,5 % von mindestens einem copolymerisierbaren Comonomer umfassen, ausgedrückt im Verhältnis des Gesamtgewichtes an Monomeren.

19. Sole oder Gele von gemischten Polymeren nach Anspruch 18, dadurch gekennzeichnet, daß die Menge an eingesetztem Initiator in der Größenordnung von 0,1 bis 5 Gew.-% liegt, bezogen auf die Monomere.

20. Verwendung der kolloidalen Lösungen, die den Gegenstand von einem der Ansprüche 1 bis 7 bilden, zur Herstellung von Oxidfilmen.

21. Verwendung der Sole oder Gele von gemischten Polymeren, die den Gegenstand von Anspruch 18 oder 19 bilden, als Material für eine Zwischenfläche oder Haftfläche zwischen einem keramischen Material und einem polymeren organischen Material.